# EUROPEAN PATENT APPLICATION

(11) **EP 1 116 813 A1**
(43) Date of publication of application: **18.07.2001**
(21) Application number: 01300153.2
(22) Date of filing: 09.01.2001
(51) Int. Cl.: D06M 15/643, D06M 15/647, D06M 15/65, D06M 13/513, C08L 83/04, C08L 83/12

(54) **Hydrophilic softener for textiles comprising epoxy glycol siloxane polymers and amine funtional materials**

(30) Priority: 10.01.2000 US 480240
(71) Applicant: DOW CORNING CORPORATION, Midland Michigan 48686-0994 (US)
(72) Inventor: Griffin, Howard Edwin, Greensboro, NC 27406 (US)
(74) Representative: Kyle, Diana

(57) **Abstract**

A textile treatment composition contains siloxanes having epoxy- and glycol- functionalities and either an aminosilane or a silicone quaternary ammonium compound. The composition is preferably formulated as an aqueous emulsion. The composition imparts durable hydrophilicity to textiles, such as cotton twill fabric, treated with the composition.

## Description

The invention relates to a textile treatment composition that provides the fiber with hydrophilicity and softness. More particularly, this invention relates to a textile treatment composition containing an amine copolymer that is suitable to treat 100% cotton textiles.

There is a growing need in the textile market for siloxane fabric softeners that not only provide softening but also impart hydrophilicity and other desirable properties to the treated fabric. Using a conventional siloxane polymer as the active ingredient in a fabric treatment agent often requires a trade-off in properties.

Amine-functional polysiloxanes are known to improve the hand of textiles. 'Hand' means the softness and smoothness of the textile. The hand of a treated textile is directly related to the amine content (e.g., the number of amino-functional groups) of the polysiloxane. Generally, as the amine content increases, the hand of the textile improves.

One method to produce amine-functional siloxane compounds for use as fabric treatment agents is to react an amino-functional silicone with an organic epoxy-functional compound. For example, Japanese Patent Application (Kokai) 59-179884 to Shin Etsu, October 12, 1984, discloses a softening agent for fiber products. The softening agent comprises an amine-functional organopolysiloxane and a liquid organic epoxy compound.

Another method was to react an epoxy-functional silicone with an amine-functional organic compound. This method is described in U.S. Patent No. 4,409,267 to Ichinohe et al., October 11, 1983, which discloses a fabric treatment composition. The organopolysiloxane is prepared by a process comprising: 1) reacting a silanol-functional organopolysiloxane with a polyoxyalkylene compound and an epoxy-functional compound, by addition reaction and thereafter 2) reacting an amine compound with the epoxy group of the epoxy-functional organopolysiloxane, by addition or condensation reaction. The reactions are typically carried out in the presence of a solvent. The solvent and any impurities formed during reaction must then be removed. This method suffers from the drawback that unsubstituted amine groups can be present, which cause yellowing when the organopolysiloxane is applied to fabrics.

U.S. Patent No. 5,593,611 to Czech, January 14, 1997, discloses a fabric treatment composition comprising an aminopolysiloxane. The aminopolysiloxane is prepared by hydrolyzing and condensing an amino-functional dialkoxysilane with water in the presence of heat and a base catalyst. The aminopolysiloxane is hydrophobic and has a molecular weight of at least 30,000.

U.S. Patent No. 4,757,121 to Tanaka et al., July 12, 1988, discloses a fiber softening composition for synthetic fibers. The composition contains a combination of 2 different amino-substituted organopolysiloxanes, an epoxy-substituted alkoxysilane, and a monoepoxy compound. The first amino-substituted organopolysiloxane is terminated with a hydroxy group or alkoxy group that reacts with the epoxy-containing alkoxysilane. This forms a film of a crosslinked composition on the fiber surface. The second amino-substituted alkoxysilane is trialkyl-silyl terminated, and the second organopolysiloxane is prepared by reacting an amino-containing organopolysiloxane with a liquid organic epoxy compound.

U.S. Patent No. 4,680,366 to Tanaka et al., July 14, 1987, discloses a fabric finishing agent containing an organopolysiloxane with primary and secondary amine-functional hydrocarbon groups and polyoxyalkylene groups. The organopolysiloxane can be emulsified in water and applied to fabric to provide softness and anti-static properties. The organopolysiloxane is prepared by reacting a polyoxyalkylene glycidyl ether with an amino-functional organopolysiloxane.

However, the amine-functional polyorganosiloxanes suffer from the drawback that as the amine content of the polyorganosiloxane increases, the tendency of the textile to discolor or yellow increases. Additionally, the amine-functionality tends to impart hydrophobicity to the treated textile.

U.S. Patent No. 5,277,968 to Canivenc, January 11, 1994, discloses a process for treating a textile fabric. The process comprises applying an aqueous emulsion of a polydiorganosiloxane to the fabric. The polydiorganosiloxane has secondary and tertiary amine-groups and hydroxyl- groups.

U.S. Patent No. 5,118,535 to Cray et al., June 2, 1992, discloses a method for treating fibrous materials comprising applying a composition containing a cyclic diamine functional polydiorganosiloxane. The composition can be a solution, dispersion, or emulsion.

EP A2 0 399 706 by Cray, published on November 28, 1990, discloses a method for treating fibrous materials. The method comprises pre-reacting an amine-containing organosiloxane with a monoepoxide, and thereafter applying the resulting product to the fibers. The product has primary, secondary, and tertiary amine groups, where up to 10% of the amine groups are primary amine groups.

U.S. Patent No. 4,366,001 to Ona et al., December 28, 1982, discloses a fiber treating composition that contains at least 2 of 3 types of organofunctional siloxanes. The first is an amino-functional siloxane, the second is a carboxyl-functional siloxane, and the third is an epoxy-functional siloxane. At least one of the organofunctional siloxanes contains at least one polyoxyalkylene group. The composition provides antistatic character, moisture absorbability, stain resistance, pliability, smoothness and compression recovery.

However, none of these references disclose a fiber treatment composition that imparts hydrophilicity and provides resistance to yellowing to textile fibers, without a detriment to hand. Therefore, it is an object of this invention to provide a textile treatment composition that provides hydrophilicity and excellent hand to textiles. It is a further object of this invention to provide a textile treatment composition that provides durable hydrophilicity to textiles. 'Durable' means that the treated fabric remains hydrophilic after one month aging, and hand is maintained for a minimum of 5 wash cycles.

This invention relates to a textile treatment composition comprising a combination of an epoxy- glycol-siloxane and an amino-functional compound. The amine copolymer formed from the combination imparts hydrophilicity and good hand to 100% cotton textiles. The composition is durable to shelf aging.

This invention relates to a textile treatment composition. The composition comprises ingredient (a) an epoxy-, glycol- siloxane, ingredient (b) an amino-functional compound selected from the group consisting of aminosilanes and silicone quaternary ammonium compounds, optional ingredient (c) a surfactant, optional ingredient (d) an acid, and optional ingredient (e) a carrier.

Ingredient (a) is an epoxy-, glycol- siloxane. Ingredient (a) has the general formula:

E₃SiO- (R¹ ₂SiO_{2/2})ₕ-(R¹R²SiO_{2/2})ⱼ - (R¹R³SiO_{2/2})ₖ - SiE₃,

wherein h is 25 to 1,000, j is 1 to 500, k is 1 to 500, and each R¹ is independently a monovalent hydrocarbon group. R¹ can be an alkyl group such as methyl, ethyl, n-propyl, isopropyl, and t-butyl or an aromatic group such as phenyl, tolyl, and xylyl. Preferably, R¹ is methyl.

Each E is independently selected from the group consisting of R¹, an epoxy-functional group, a polyoxyalkylene group, and combinations thereof.

Each R² is independently a polyoxyalkylene group having the formula:

-CₘH₂ₘ(OC₂H₄)ₓ-(OC₃H₆)_{y}-OR⁴

wherein m is an integer with a value of 2 to 8, x is an integer with a value of 0 to 200, y is an integer with a value of 1 to 200, each R⁴ is independently selected from the group consisting of hydrogen, acyl groups of 1 to 8 carbon atoms, and R¹. Preferably, R² has the structure:

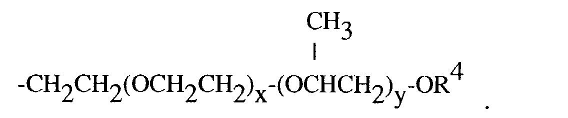

Each R³ is independently selected from the group consisting of an epoxy-functional group and an amino-functional group, with the proviso that ingredient (a) has at least one epoxy-functional group per molecule. Suitable epoxy-functional groups are monovalent organic groups containing at least one vicinal epoxy group having the structure

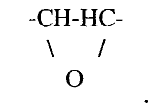

Epoxy-functional groups for R³ are preferably selected from the group consisting of: 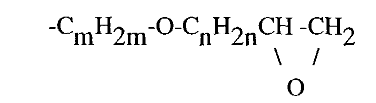 and 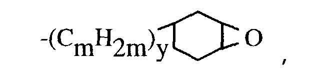 wherein m is an integer with a value of 2 to 8, n is an integer with a value of 0 to 8, and y is as described above. Suitable amino-functional groups for R³ have the general formula

-CₘH₂ₘNR¹₂

wherein R¹ and m are as described above.

The amount of ingredient (a) in the composition is typically 20 to 40 weight %.

Ingredient (a) can be prepared by the method disclosed in U.S. Patent No. 4,184,004. Preferably, ingredient (a) is formed by heating a composition comprising (i) a polyorganohydrogen siloxane, (ii) an alkenyl-functional glycol ether, (iii) an alkenyl-functional epoxy compound, (iv) a catechol compound, and (v) a hydrosilylation reaction catalyst.

Ingredient (i) preferably has the general formula:

E₃SiO- (R¹₂SiO_{2/2})ₕ- (R¹HSiO_{2/2})ₚ-SiE₃,

wherein E, R¹, and h, are as described above and p is 2 to 1,000. Preferably, ingredient (i) is a trimethylsiloxy-terminated dimethyl, methylhydrogensiloxane.

Ingredient (ii) is an alkenyl-functional glycol ether having the general formula:

CH₂=CH-CₙH₂ₙ(OC₂H₄)ₓ-(OC₃H₆)_{y}-OR⁴,

wherein x, y, n, and R⁴ are as described above. Suitable alkenyl-functional glycol ethers are known in the art and are commercially available. For example, polyethylene-polypropylene glycol allyl methyl ether is commercially available under the tradename TG-505 from Sanyo Chemical Industries.

Ingredient (iii) is an alkenyl-functional epoxy compound. Ingredient (iii) is exemplified by compounds selected from the group consisting of 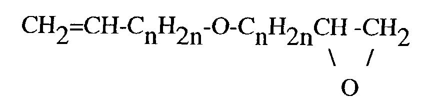 and 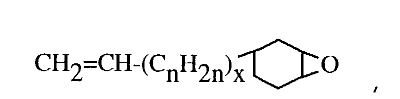 wherein n and x are as described above.

Preferably, the alkenyl-functional epoxy compound is an alkenyl-functional epoxy ether. For example, allylglycidyl ether is known in the art and commercially available under the tradename Neoallyl G.

Ingredient (iv) a catechol compound. Suitable catechol compounds have the general formula: 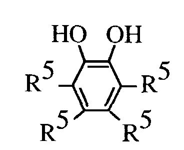 wherein each R⁵ is independently selected from the group consisting of hydrogen and R¹. Suitable catechol compounds are known in the art and are commercially available. For example, 4-t-butylpyrocatechol is available from Acros Organics and Wako Pure Chemical.

Ingredient (v) is a hydrosilylation reaction catalyst. Suitable hydrosilylation catalysts are known in the art. For example, ingredient (v) may be any known platinum or rhodium hydrosilylation catalyst. Suitable catalysts are exemplified by chloroplatinic acid, alcohol solutions of chloroplatinic acid, complexes of platinum compounds with unsaturated organic compounds such as olefins, and complexes of platinum compounds with organosiloxanes containing unsaturated hydrocarbon groups, where these complexes of platinum with organosiloxanes can be embedded in organosiloxane resins.

Ingredient (b) is selected from the group consisting of aminosilanes and silicone quaternary ammonium compounds. Suitable aminosilanes have the general formula R⁶_{z}Si(OR¹)_{4-z} where R¹ is as described above, R⁶is an amine- containing group, and z is an integer with a value of 1 to 3, preferably 1 or 2. R⁶ has the general formula -R⁸R⁷, wherein each R⁷ is independently selected from the group consisting of a hydrogen atom and a group of the formula -R⁸NH₂, and each R⁸is independently a divalent hydrocarbon group. Typically, R⁶is an aminoalkyl group, such as - (CH₂)_{w}NH₂ or- (CH₂)_{w}NH- (CH₂)_{w}NH₂, wherein w is an integer, preferably with a value of 2 to 4. Examples of preferred aminosilanes include: aminoethylaminoisobutylmethyldimethoxysilane, (ethylenediaminepropyl)-trimethoxysilane, and gammaaminopropyltriethoxysilane.

Aminosilanes are known in the art and are commercially available. U.S. Patent No. 5,117,024, discloses aminosilanes and methods for their preparation.

Suitable silicone quaternary ammonium compounds are disclosed by U.S. Patent No. 5,026,489 entitled, "Softening Compositions Including AlkanolaminoFunctional Siloxanes." The patent discloses monoquaternary ammonium functional derivatives of alkanolamino polydimethylsiloxanes. The derivatives are exemplified by

(R⁹ ₃SiO)₂Si R⁹-(CHR¹⁰)ₐN R¹⁰ _{b} R¹¹ _{2-b}

wherein R⁹ is an alkyl group, R¹⁰ is H, alkyl, or aryl, R¹¹ is (CHR¹⁰)OH, a is 1 to 10, and b is 1 or 2.

Silicone quaternary ammonium compounds are known in the art and are commercially available. Examples of preferred silicone quaternary ammonium compounds include Q-100 and Q-400, both available from Lambent Technologies Corporation.

The amount of ingredient (b) is typically 2 to 20 weight % of the textile treatment composition. When an aminosilane is used for ingredient (b), the amount is typically 2 weight % of the textile treatment composition. When a silicone quaternary ammonium compound is used for ingredient (b), the amount is typically 10 to 20 weight % of the composition.

The textile treatment composition may further comprise one or more optional ingredients. For example, the following optional ingredients can be added to the fiber treatment composition: (c) a surfactant, (d) an organic acid, (e) a carrier, (f) a thickener, (g), a crease resist resin, (h) an oil soluble colorant, (j) a water soluble colorant, (k) an organic fiber treatment compound, (1) an organosiloxane fiber treatment compound, and combinations thereof.

Ingredient (c) is an optional surfactant selected from the group consisting of cationic and nonionic surfactants. Nonionic surfactants are preferred. Ingredient (c) is preferably a GENAPOL® UD surfactant available from Hoechst Celanese. GENAPOL® UD is a trademark for nonionic ethoxylated C11 branched and linear alcohols having CAS No. 127036242. Ingredient (c) is added when the textile treatment composition is formulated as an emulsion. The amount of ingredient (c) is typically 5 to 20 weight % of the emulsion.

The emulsion can further comprise optional ingredient (d), an organic acid. Ingredient (d) is preferably glacial acetic acid. The amount of ingredient (d) in the emulsion is typically greater than 0 to 2 weight%, preferably 0.4 weight%.

Ingredient (e) is a carrier selected from the group consisting of water and organic solvents. Suitable organic solvents include hydrocarbons such as aromatic hydrocarbons exemplified by toluene, benzene, and xylene; alkanes such as hexane and heptane; ketones such as acetone, methyl ethyl ketone, and methylisobutyl ketone; and alcohols such as propanol and butanol. Ingredient (e) is preferably water. The amount of ingredient (e) is typically 18-73 weight %, preferably 45 to 55 weight % of the emulsion.

The textile treatment composition can have any suitable form. For example, the composition can be applied to the textile neat. However, the textile treatment composition can be a solution, dispersion, or emulsion. Preferably, the textile treatment composition is an emulsion comprising:
i) a discontinuous phase comprising (a) the epoxy-, glycol- siloxane and (b) the compound selected from the group consisting of aminosilanes and silicone quaternary ammonium compounds,
ii) a continuous phase comprising ingredient (e), and
iii) ingredient (c), a surfactant. Ingredient (d), an organic acid, is preferably added to the emulsion.

The combined amounts of active ingredients (a) and (b) in the emulsion is typically 22-60 weight% of the emulsion.

This invention further relates to a method for preparing a textile treatment composition. The method comprises combining ingredients (a) and (b) with any optional ingredients. Typically, ingredients (a) and (b) and any optional ingredients are combined by a process selected from the group consisting of dissolving, dispersing, and emulsifying.

Preferably, an emulsion comprising ingredients (a), (b), (c), and (e) is prepared. A method for the preparation of an emulsion of an organopolysiloxane is known in the art and is disclosed in U.S. Patent No. 5,258,451.

The textile treatment composition can be prepared by independently combining ingredient (a) and ingredient (b) separately with optional ingredients to form a plurality of treatment agents. The plurality of treatment agents can then be combined before application to the textiles, or they can be applied to the textiles simultaneously or sequentially. For example, the textile treatment composition can be prepared by forming (1) a first treatment agent comprising ingredient (a) and ingredient (e) and (2) a second treatment agent comprising ingredient (b) and ingredient (e). Preferably, (1) the first treatment agent and (2) the second treatment agent are both emulsions, ingredient (e) is water, and (1) the first treatment agent further comprises a first surfactant and the second treatment agent further comprises a second surfactant. Treatment agents (1) and (2) can then be mixed together and thereafter applied to the textiles. Alternatively, treatment agent (1) can be applied to the textiles, and thereafter treatment agent (2) can be applied to the textiles. Alternatively, treatment agent (2) can be applied to the textiles, and thereafter treatment agent (1) can be applied to the textile.

This invention further relates to a method for treating textiles. The method comprises applying the textile treatment composition to the textile and thereafter removing (e) the carrier, if any. The textile treatment composition can be applied to the textile by any convenient method. For example, the composition can be applied by padding, dipping, or spraying. When the textile treatment composition comprises more than 1 solution, dispersion, or emulsion; the solutions, dispersions, and emulsions can be applied simultaneously or sequentially to the textiles.

After the textile treatment composition is applied to the fabric, it can be cured by heating during or after removal of the carrier, if any. For example, heating to a temperature of 150 °C for 3 minutes is usually sufficient for curing.

The textile treatment composition can be applied to the textiles during making the textiles or later, such as during laundering the textiles. After application, the carrier can be removed from the textile treatment composition by, for example, drying at ambient or elevated temperature. Preferably, after removal of the carrier, the ingredients left on the textile are cured, e.g., by heating.

The amount of textile treatment composition applied to the textile is typically sufficient to provide 0.1 to 15 weight % of the combined weights of ingredients
(a) and (b) on the textile, based on the dry weight of the textile. Preferably, the combined amounts of ingredients (a) and (b) on the fibers is 0.2 to 1 wt% based on the dry weight of the textile.

The textiles that can be treated with the composition described above are not specifically restricted. Suitable textiles include textiles comprising natural fibers such as cotton, silk, linen, and wool; regenerated fibers such as rayon and acetate; synthetic fibers such as polyesters, polyamides, polyacrylonitriles, polyethylenes, polypropylenes; and combinations and blends thereof.

The textile treatment composition of this invention provides several advantages over compositions known in the art. This invention imparts both durable hand and durable hydrophilicity to the treated textiles.

These examples are intended to illustrate the invention to those skilled in the art and should not be interpreted as limiting the scope of the invention set forth in the claims.

### Reference Example 1

Emulsion samples were prepared by combining (a) an epoxy-, glycol- siloxane, (b) an aminosilane, (c) a surfactant, and (d) an acid. Ingredient (a) was a reaction product of dimethyl, methylhydrogen siloxane with allyl glycidyl ether and allyl ethylene oxide propylene oxide methyl ether.

The resulting mixture was stirred for 5 to 10 minutes. The surfactant was GENAPOL® UD 050. GENAPOL® UD 050 is ethoxylated C11 branched and linear alcohols, available from Hoechst Celanese. The acid was glacial acetic acid.

Ingredient (e) water was then added slowly and stirred for 10 minutes to form an emulsion.

### Reference Example 2

Emulsion samples were prepared by combining (a) the epoxy-, glycol- siloxane of Reference Example 1, (b) an aminosilane, a surfactant, and an acid. The resulting mixture was stirred for 5 to 10 minutes. The surfactant was either GENAPOL® UD 050 or GENAPOL® UD 110. GENAPOL® UD 050 and GENAPOL® UD 110 are ethoxylated C11 branched and linear alcohols, available from Hoechst Celanese. The acid was glacial acetic acid. Water was then added slowly and stirred for 10 minutes to form an emulsion.

### Reference Example 3 - Evaluation of Emulsion Samples

Each emulsion sample was applied to 100% cotton twill fabric from Yorkshire Pat Chem. The pad box formulation was designed to deposit a 1% silicone solids level on the fabric. The treated fabric was dried and cured at 150°C for 3 minutes.

The hand and absorbency were evaluated on each sample. Hand is a relative measurement provided by a group of 3 or 4 evaluators. Hand of each sample is ranked relative to the other samples. A rating of 1 indicates the best hand, i.e. softest and smoothest feel, and higher numbers indicate decreasing hand. Evaluators were asked to select samples with the best (1) and the next best (2) hand in the group.

Absorbency was measured initially by AATCC (American Association of Textile Chemist and Colorist) Test Method 79-1995-Absorbance of Bleached Textiles. In this method, a drop of water is allowed to fall from a fixed height onto the taut surface of a fabric test specimen. The time required for the specular reflection of the water drop to disappear is measured and recorded as wetting time.

### Example 1

Sample 1 was an emulsion prepared by the method of Reference Example 1. The aminosilane was (ethylenediaminepropyl)trimethoxysilane. The formulation is in Table 1.

The emulsion was applied to fabric and analyzed for hand and absorbency by the method of Reference Example 3. The results are in Table 3.

### Example 2

Sample 2 was an emulsion prepared by the method of Reference Example 1. The aminosilane was aminoethylaminoisobutylmethyldimethoxysilane. The formulation is in Table 1.

The emulsion was applied to fabric and analyzed for hand and absorbency by the method of Reference Example 3. The results are in Table 3.

### Example 3

Sample 3 was an emulsion prepared by the method of Reference Example 1. The aminosilane was gammaaminopropyltriethoxysilane. The formulation is in Table 1.

The emulsion was applied to fabric and analyzed for hand and absorbency by the method of Reference Example 3. The results are in Table 3.

### Example 4

Sample 4 was an emulsion prepared by the method of Reference Example 2. The aminosilane was (ethylenediaminepropyl) trimethoxysilane. The emulsion also contained Lambent Q-400 silicone quaternary ammonium. The surfactant was GENAPOL UD 050. The formulation is in Table 2.

Hand and absorbency were analyzed by the method of Reference Example 3. Absorbency was measured again 3 to 4 weeks later by dropping a drop of water from an eye dropper onto the fabric and visually observing whether absorption was immediate. The results are in Table 3.

### Example 5

Sample 5 was an emulsion prepared by the method of Reference Example 2. The aminosilane was (ethylenediaminepropyl) trimethoxysilane. The emulsion also contained Lambent Q-400 silicone quaternary ammonium. The surfactant was GENAPOL UD 050. The formulation is in Table 2.

Hand and absorbency were analyzed by the method of Reference Example 3. The results are in Table 3.

### Example 6

Sample 6 was an emulsion prepared by the method of Reference Example 2. The aminosilane was (ethylenediaminepropyl) trimethoxysilane. The emulsion also contained Lambent Q-100 silicone quaternary ammonium. The surfactant was GENAPOL UD 050. The formulation is in Table 2.

Hand and absorbency were analyzed by the method of Reference Example 3. The results are in Table 3.

### Example 7

Sample 7 was an emulsion prepared by the method of Reference Example 2. The aminosilane was (ethylenediaminepropyl) trimethoxysilane. The emulsion also contained Lambent Q-400 silicone quaternary ammonium. The surfactant was GENAPOL UD 110 The formulation is in Table 2.

Hand and absorbency were analyzed by the method of Reference Example 3. Absorbency was measured again 3 to 4 weeks later by dropping a drop of water from an eye dropper onto the fabric and visually observing whether absorption was immediate. The results are in Table 3.

### Comparative Example 1

In Comparative Example 1, a piece of untreated cotton twill was analyzed for hand and absorbency by the method of Reference Example 3.

**Table 1 -**

| Amounts for Ingredients in the Emulsion (wt% Based on Total Wt of Emulsion) | | | |
|---|---|---|---|
| Ingredient | Sample 1 | Sample 2 | Sample 3 |
| Epoxy-, Glycol- Siloxane | 38 | 38 | 38 |
| Aminosilane | 2 | 2 | 2 |
| GENAPOL® UD 050 | 5 | 10 | 5 |
| GENAPOL® UD 110 | 0 | 0 | 0 |
| Acetic Acid | 0.4 | 0.4 | 0.4 |
| Water | 54.6 | 49.6 | 54.6 |

**Table 2 -**

| Amounts for Each Ingredient in the Emulsion | | | | |
|---|---|---|---|---|
| Ingredient | Sample 4 | Sample 5 | Sample 6 | Sample 7 |
| Epoxy-, Glycol- Siloxane | 30 | 20 | 20 | 20 |
| Aminosilane | 2 | 2 | 2 | 2 |
| Silicone Quaternary Ammonium | 10 | 20 | 20 | 20 |
| GENAPOL® UD 050 | 5 | 5 | 5 | 0 |
| GENAPOL® UD 110 | 0 | 0 | 0 | 10 |
| Acetic Acid | 0.4 | 0.4 | 0.4 | 0.4 |
| Water | 52.6 | 52.6 | 52.6 | 47.6 |

Amounts are in weight % based on the entire weight of the emulsion.

**Table 3 -**

| Results of Hand and Absorbency Analyses | | | |
|---|---|---|---|
| Sample | Hand | Initial Absorbency (seconds) | Absorbency After 3 to 4 Weeks |
| 1 | - | > 5 | not measured |
| 2 | 2 | > 5 | not measured |
| 3 | - | > 5 | not measured |
| 4 | 1 | immediately | immediately |
| 5 | - | did not run | not measured |
| 6 | - | did not run | not measured |
| 7 | - | immediately | immediately |
| Comparati ve Example 1 | - | 8-10 | not measured |

Samples 1, 2, and 3 show that emulsions containing an epoxy, glycol- siloxane polymer and an aminosilane provide good hydrophilicity, as shown by the absorbency values. Sample 2, which contained aminoethylaminoisobutylmethyldimethoxysilane as the aminosilane, had better hand than samples 1 and 3, which contained different aminosilanes.

Samples 4-7 show that emulsions containing an epoxy-, glycol- siloxane polymer and a silicone quaternary ammonium compound provide excellent hydrophilicity.

## Claims

1. A textile treatment composition comprising:
(a) an epoxy-, glycol- siloxane having the general formula
E₃SiO-(R¹ ₂SiO_{2/2})ₕ - (R¹R²SiO_{2/2})ⱼ - (R¹R³SiO_{2/2})ₖ-SiE₃,
wherein h is 25 to 1,000, j is 1 to 500, k is 1 to 500, each R¹ is independently a monovalent hydrocarbon group, each E is independently selected from the group consisting of R¹, an epoxy-functional group, a polyoxyalkylene group, and combinations thereof, each R² is independently a polyoxyalkylene group having the formula
-CₘH₂ₘ(OC₂H₄)ₓ-(OC₃H₆)_{y}-OR⁴
wherein x is an integer with a value of 0 to 200, y is an integer with a value of 1 to 200, m is an integer with a value of 2 to 8, and each R⁴ is independently selected from the group consisting of hydrogen, acyl groups of 1 to 8 carbon atoms, and R¹, and each R³ is independently selected from the group consisting of an epoxy-functional group and an amino-functional group, with the proviso that ingredient (a) has at least one epoxy-functional group per molecule, wherein the epoxy-functional groups are selected from the group consisting of 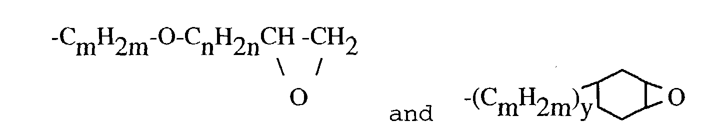 wherein m, n, and y are as described above, and the amino-functional groups have the general formula
-CₘH₂ₘNR¹ ₂
wherein R¹ and m are as described above, and
(b) an amino-functional compound selected from the group consisting of aminosilanes and silicone quaternary ammonium compounds, wherein the aminosilanes have the general formula R⁶_{z}Si(OR¹)_{4-z}, where z is an integer with a value of 1, to 3, R¹ is as previously defined, and R⁶ is an amine- containing group having the general formula - R⁸NR⁷₂, wherein each R⁷ is independently selected from a hydrogen atom and a group of the formula -R⁸NH₂, and each R⁸ is independently a divalent hydrocarbon group, and silicone quaternary ammonium compounds.

2. The composition according to claim 1, wherein ingredient (b) is an aminosilane selected from aminoethylaminoisobutylmethyldimethoxysilane, (ethylenediaminepropyl) -trimethoxysilane, and gammaaminopropyltriethoxysilane.

3. The composition according to claim 1, wherein ingredient (b) is a silicone quaternary ammonium compound having the general formula
(R⁹ ₃SiO)₂Si R⁹ - (CHR¹⁰)ₐN R¹⁰ _{b} R¹¹ _{2-b}
wherein R⁹ is an alkyl group, R¹⁰ is selected from H, alkyl, and aryl groups, R¹¹ is (CHR¹⁰)OH, a is 1 to 10, and b is 1 or 2.

4. The composition according to any of claims 1 to 3, wherein the composition further comprises ingredient (e) a carrier, ingredient (a) is present at 20 to 40 weight % of the composition, and ingredient (b) is present at 2 to 20 weight % of the composition.

5. A textile treatment emulsion comprising the composition according to any of claims 1 to 4 together with ingredients
(c) a surfactant; and
(e) water.

6. The emulsion according to claim 5, further comprising ingredient (d), an organic acid which is present at greater than 0 to 2 weight percent, and wherein ingredients (a) and (b) combined are present at 22 to 60 weight % of the emulsion, (c) the surfactant is present at 5 to 20 weight % of the emulsion, and (e) the water is present at 18 to 73 weight % of the emulsion.

7. A method for treating textiles comprising:
1) applying to a textile, a textile treatment composition according to any of claims 1 to 4 together with
(e) a carrier, and thereafter
2) removing the carrier.

8. The method according to claim 7, wherein the method further comprises: 3) heating to cure ingredients (a) and (b).

9. The method according to claim 7 or 8, wherein the textile treatment composition is applied to the textile in an amount sufficient to provide 0.1 to 15 wt% of ingredients (a) and (b) combined on the textile.

10. A method for treating textiles'comprising:
1) applying to a textile, a textile treatment emulsion according to claim 5 or 6; and thereafter
2) removing the water.
